# EUROPEAN PATENT APPLICATION

(11) **EP 4 799 474 A1**
(43) Date of publication of application: **02.09.2026**
(21) Application number: 26160573.7
(22) Date of filing: 25.02.2026
(51) Int. Cl.: A01G 31/00, A01G 31/02, A01G 31/04

(54) **VEGETABLE AND FRUIT CULTIVATION SYSTEM WITH LOW POTASSIUM AND ADJUSTABLE NUTRIENTS**

(30) Priority: 27.02.2025 TW 114202027 U
(71) Applicant: KFRT Co., Ltd., 704 Tainan City (TW)
(72) Inventor: CHUNG, HSING-YING, 912 Pingtung (TW); HSU, YANG-KANG, 704 Tainan City (TW); WANG, CHAO-WEN, 704 Tainan City (TW); CHENG, WAN-LIN, 912 Neipu (TW); CHUANG, JUI-CHE, 912 Neipu (TW)
(74) Representative: Patentwerk B.V.

(57) **Abstract**

A vegetable and fruit cultivation system with low potassium and adjustable nutrients includes a base (1), provided with at least two nutrient solution tanks (11) that are spaced apart; a cultivation tray (2), slidably disposed on the base (1) and adapted to slide to and be aligned with different nutrient solution tanks (11) according to the cultivation period of vegetables and fruits; an environment control module (3), configured to adjust the temperature and lighting around the cultivation tray (2); a solution supply module (4), including a first supply device (41) and a second supply device (42), the first supply device (41) being configured to provide a potassium-containing culture solution to one of the nutrient solution tanks (11), and the second supply device (42) being configured to provide a low-potassium culture solution or a potassium-free culture solution to the other nutrient solution tank (11); and a microcontroller unit (5), electrically connected to the environment control module (3) and the solution supply module (4) to control the operation of the environment control module (3) and the supply amount and timing of the culture solution provided by the first supply device (41) and the second supply device (42) to the nutrient solution tank (11).

## Description

### BACKGROUND OF THE INVENTION

### 1. Field of the Invention

The disclosure relates to a vegetable and fruit cultivation system, and in particular to a vegetable and fruit cultivation system with low potassium and adjustable nutrients that can cultivate vegetables and fruits with a low potassium content.

### 2. Description of the Related Art

Chronic kidney disease (CKD), also known as chronic kidney failure, is defined as: renal impairment manifested by a glomerular filtration rate (GFR) less than 60 mL/min/1.73 m2; abnormalities detected through blood tests, urine tests, or imaging examinations; and a disease history lasting three months or longer. When the glomerular filtration rate drops below 15 mL/min/1.73 m2, it indicates that the patient's kidneys are no longer functioning properly. Hemodialysis (commonly known as kidney dialysis) is then required to replace kidney function.

Therefore, for patients with impaired kidney function, there are numerous considerations regarding daily diet, including the need to restrict potassium intake. However, many vegetables and fruits have high potassium ion content, causing the patients with impaired kidney function (particularly patients undergoing hemodialysis) to often avoid consuming them readily, resulting in nutritional imbalance.

### BRIEF SUMMARY OF THE INVENTION

In view of this, the inventors have developed a vegetable and fruit cultivation system with low potassium and adjustable nutrients that can cultivate vegetables and fruits with a low potassium content.

In order to achieve the above or other objectives, the disclosure provides a vegetable and fruit cultivation system with low potassium and adjustable nutrients, including: a base, provided with at least two nutrient solution tanks that are spaced apart; a cultivation tray, slidably disposed on the base and adapted to slide to and be aligned with different nutrient solution tanks according to the cultivation period of vegetables and fruits; an environment control module, configured to adjust the temperature and lighting around the cultivation tray; a solution supply module, including a first supply device and a second supply device, the first supply device being configured to provide a potassium-containing culture solution to one of the nutrient solution tanks, and the second supply device being configured to provide a low-potassium culture solution or a potassium-free culture solution to the other nutrient solution tank; and a microcontroller unit, electrically connected to the environment control module and the solution supply module to control the operation of the environment control module and the supply amount and timing of the culture solution provided by the first supply device and the second supply device to the nutrient solution tank.

In the vegetable and fruit cultivation system with low potassium and adjustable nutrients, the cultivation tray may include a carrying tray and a sliding structure. The sliding structure may be connected to the carrying tray and the base.

In the vegetable and fruit cultivation system with low potassium and adjustable nutrients, the carrying tray may have a main body and a skirting. The skirting is connected to the outer periphery of the main body, and the sliding structure may be disposed between the skirting and a support surface of the base.

In the vegetable and fruit cultivation system with low potassium and adjustable nutrients, the base may include a bottom plate and a peripheral wall. The peripheral wall may be connected to the circumference of the bottom plate. At least one partition may be connected to the bottom plate and the inner wall of the peripheral wall to divide the inside of the base into the at least two nutrient solution tanks. The support surface may be the top surface of the peripheral wall. The skirting may be vertically aligned with the support surface.

In the vegetable and fruit cultivation system with low potassium and adjustable nutrients, the sliding structure may be a rolling member mounted to the skirting.

The vegetable and fruit cultivation system with low potassium and adjustable nutrients may further include a sliding driver. The microcontroller unit is electrically connected to the sliding driver to control the sliding driver such that the cultivation tray slides relative to the base.

In the vegetable and fruit cultivation system with low potassium and adjustable nutrients, the environment control module may include an image capture unit, and the microcontroller unit is electrically connected to the image capture unit. The image capture unit is adapted to capture an image of fruit and vegetable plants on the cultivation tray. After receiving the image, the microcontroller unit analyzes a growth status of the fruit and vegetable plants to control the sliding driver such that the cultivation tray slides relative to the base and is aligned with a suitable nutrient solution tank.

In the vegetable and fruit cultivation system with low potassium and adjustable nutrients, the number of the nutrient solution tanks may be an even number greater than two, and the plurality of nutrient solution tanks may be arranged along an extending direction. The first supply device is adapted to provide the potassium-containing culture solution to the odd-numbered nutrient solution tanks, and the second supply device is adapted to provide the low-potassium culture solution or the potassium-free culture solution to the even-numbered nutrient solution tanks.

In the vegetable and fruit cultivation system with low potassium and adjustable nutrients, the solution supply module may further include at least one third supply device. The third supply device is adapted to provide a conditioning culture solution to the nutrient solution tank to change the formulation of the culture solution in the nutrient solution tank.

In the vegetable and fruit cultivation system with low potassium and adjustable nutrients, the solution supply module may further include at least one liquid level sensor. The liquid level sensor is disposed in the nutrient solution tank and configured to sense the liquid level in the nutrient solution tank. The microcontroller unit receives a sensing signal of the liquid level sensor to control the first supply device or the second supply device to stop supplying the culture solution to the nutrient solution tank, or control the first supply device or the second supply device to replenish the culture solution to the nutrient solution tank when the liquid level of the culture solution in the nutrient solution tank drops below a set threshold.

Thus, according to the vegetable and fruit cultivation system with low potassium and adjustable nutrients in the disclosure, the cultivation tray can slide to and be aligned with different nutrient solution tanks according to the cultivation period of vegetables and fruits. This allows the fruit and vegetable plants to absorb specific culture solutions and grow, and it is very convenient to switch between different nutrient solutions. The vegetables and fruits cultivated by the vegetable and fruit cultivation system of the disclosure contains low potassium or nearly no potassium, and thus can be safely consumed by patients with impaired kidney function and help to improve their dietary balance and health.

### BRIEF DESCRIPTION OF THE DRAWINGS

FIG. 1 is a schematic plan view of an embodiment of the disclosure.
FIG. 2 is a schematic three-dimensional partial sectional view of an embodiment of the disclosure.
FIG. 3 is a schematic three-dimensional partial sectional view of an embodiment of the disclosure from another direction, where the arrow shows the sliding direction of a cultivation tray.
FIG. 4 is a block diagram of the system of an embodiment of the disclosure.

### DETAILED DESCRIPTION OF THE INVENTION

In order to fully understand the objectives, features and effects of the disclosure, a detailed description of the disclosure will be made below with reference to the following specific embodiments and accompanying drawings.

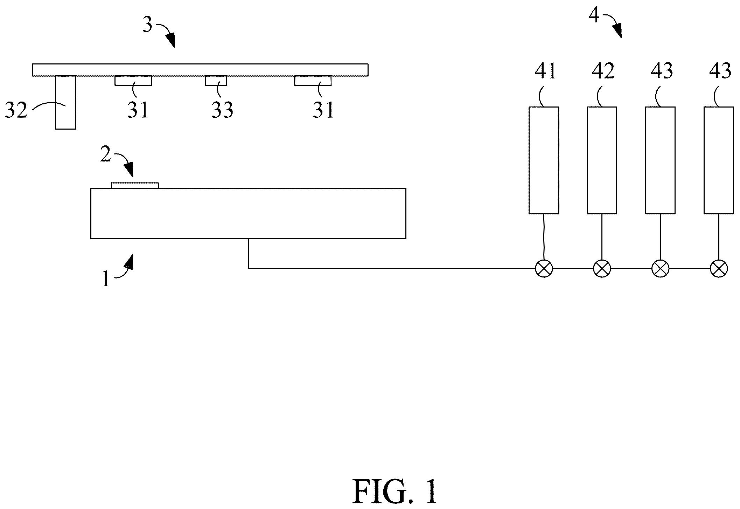

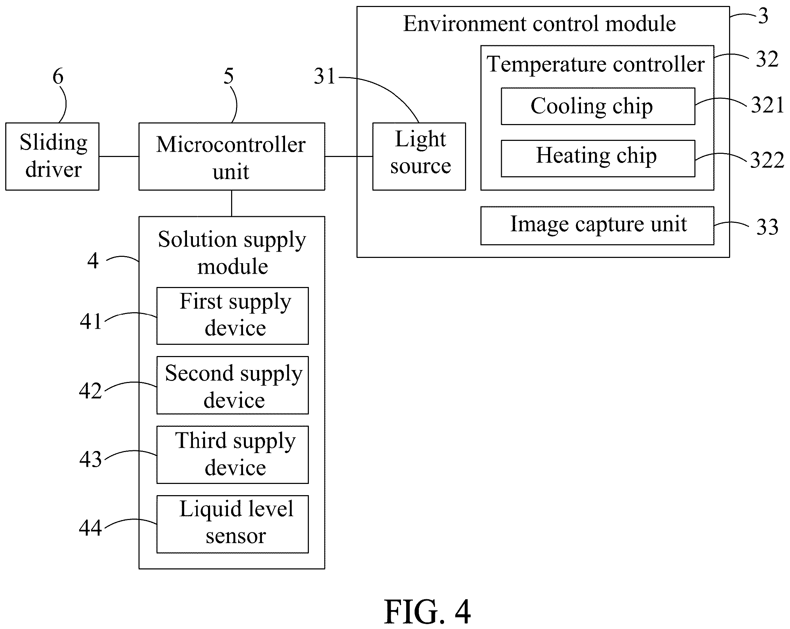

FIG. 1 and FIG. 4 show a preferred embodiment of a vegetable and fruit cultivation system with low potassium and adjustable nutrients according to the disclosure. The vegetable and fruit cultivation system includes a base 1, a cultivation tray 2, an environment control module 3, a solution supply module 4, and a microcontroller unit 5. The cultivation tray 2 is slidably disposed on the base 1. The microcontroller unit 5 is electrically connected to the environment control module 3 and the solution supply module 4.

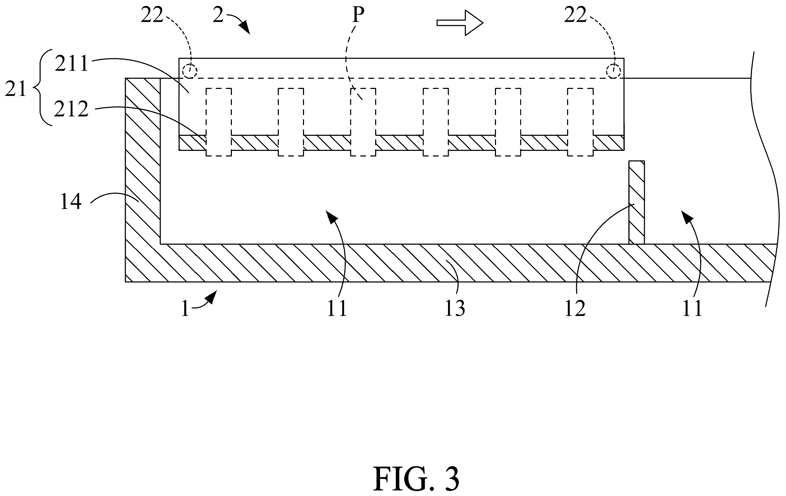

Referring to FIG. 1 to FIG. 3, the base 1 is provided with at least two nutrient solution tanks 11 that are spaced apart. In an embodiment of the disclosure, the at least two nutrient solution tanks 11 may be directly formed inside the base 1. Every two adjacent nutrient solution tanks 11 are separated by a partition 12. Specifically, the base 1 may include a bottom plate 13 and a peripheral wall 14. The peripheral wall 14 is connected to the circumference of the bottom plate 13. The partition 12 is connected to the bottom plate 13 and the inner wall of the peripheral wall 14 such that the inside of the base 1 can be divided into a plurality of nutrient solution tanks 11. Liquids in every two adjacent nutrient solution tanks 11 cannot communicate with each other as long as they are not higher than the partition 12. Additionally, the height of the partition 12 may be less than the height of the peripheral wall 14, so that a space for the sliding movement of the cultivation tray 2 is reserved above each of the nutrient solution tanks 11 inside the base 1. However, the disclosure is not limited thereto. In other possible embodiments, the base 1 may be, for example, a seat, on which a plurality of solution basins may be disposed, and the nutrient solution tanks 11 are formed inside the plurality of solution basins.

The cultivation tray 2 includes a carrying tray 21. The carrying tray 21 may have a main body 211 and a plurality of planting parts 212. The plurality of planting parts 212 may be, for example, disposed on the main body 211 in an array. Each of the planting parts 212 has a hole and can accommodate an adsorbing member (not shown). The adsorbing member may be, for example, a medium that can be used for adsorbing a culture solution, such as a sponge. The adsorbing member can be used for holding fruit and vegetable seeds. Alternatively, sprouted fruit and vegetable seeds may be transferred to the adsorbing member for continued growth.

The environment control module 3 is configured to adjust the temperature and lighting around the cultivation tray 2. Specifically, the environment control module 3 may include a light source 31 and a temperature controller 32. The light source 31 may be, for example, an LED lamp, which can be controlled for switching on/off or for adjusting its illuminance and a color temperature. The temperature controller 32 may include, for example, a cooling chip 321 and a heating chip 322. The cooling chip 321 is configured to reduce the ambient temperature. The heating chip 322 is configured to increase the ambient temperature.

The solution supply module 4 includes a first supply device 41 and a second supply device 42. The first supply device 41 is configured to provide a potassium-containing culture solution to one of the nutrient solution tanks 11. The second supply device 42 is configured to provide a low-potassium culture solution or a potassium-free culture solution to the other nutrient solution tank 11.

Referring to FIG. 1 and FIG. 4, the microcontroller unit 5 is electrically connected to the environment control module 3 and the solution supply module 4 to control the operation of the environment control module 3 and the supply amount and timing of the culture solution provided by the first supply device 41 and the second supply device 42 to the nutrient solution tank 11.

Referring to FIG. 1 to FIG. 4, the vegetable and fruit cultivation system of this example is used to grow fruits and vegetables, taking the cultivation from vegetable and fruit seeds as an example, the cultivation tray 2 may be erected on the base 1, so that the plurality of planting parts 212 of the carrying tray 21 can be aligned with one of the nutrient solution tanks 11.

During a germination period, the vegetable and fruit seeds are put into the water-containing adsorbing members in the plurality of planting parts 212. The microcontroller unit 5 can control the temperature controller 32 of the environment control module 3 to provide an appropriate temperature around the cultivation tray 2.

After the vegetable and fruit seeds sprout, a seedling cultivation period begins. The microcontroller unit 5 can control the light source 31 and the temperature controller 32 of the environment control module 3 to provide appropriate lighting and temperature around the cultivation tray 2, enabling the vegetable and fruit seedlings to grow smoothly.

In a culture period, the microcontroller unit 5 can control the light source 31 and the temperature controller 32 of the environment control module 3 to provide appropriate lighting and temperature around the cultivation tray 2, and control the first supply device 41 to provide the potassium-containing culture solution to the nutrient solution tank 11 aligned with the plurality of planting parts 212 such that the fruit and vegetable plants P can absorb the potassium-containing culture solution and grow in the culture period.

When the fruit and vegetable plants P enters a treatment period, the microcontroller unit 5 can control the second supply device 42 to provide the low-potassium culture solution or the potassium-free culture solution to the other nutrient solution tank 11 and enable the cultivation tray 2 to slide relative to the base 1, so that the plurality of planting parts 212 are aligned with the nutrient solution tank 11 containing the low-potassium culture solution or the potassium-free culture solution. In addition, the microcontroller unit controls the light source 31 and the temperature controller 32 of the environment control module 3 to provide appropriate lighting and temperature around the cultivation tray 2, so that the fruit and vegetable plants P can absorb the low-potassium culture solution or the potassium-free culture solution and grow in the treatment period and then be harvested at the end of the treatment period.

Thus, according to the vegetable and fruit cultivation system of this embodiment, the cultivation tray 2 can slide to and be aligned with different nutrient solution tanks 11 according to the cultivation period of vegetables and fruits, so that the fruit and vegetable plants P can absorb a specific culture solution and grow, and it is very convenient to switch between different nutrient solutions. In the culture period, the potassium-containing culture solution can ensure the healthy growth of the fruit and vegetable plants P. In the treatment period before harvesting, the low-potassium culture solution or the potassium-free culture solution can be used to reduce the potassium content in the harvested vegetables and fruits. In this way, the low-potassium vegetables and fruits can be safely consumed by patients with impaired kidney function, thereby providing a balanced diet and improving the patients' health.

It is worth mentioning that the vegetable and fruit cultivation system of this embodiment can also cultivate vegetables and fruits from the seedling cultivation period or the culture period, without necessarily starting from vegetables and fruits from seeds. That is, the disclosure aims to improve the convenience of switching between different nutrient solutions for the plant P in different cultivation periods, and is therefore not limited to the aforementioned cultivation example.

In addition, the disclosure does not limit the slidable connection structure between the cultivation tray 2 and the base 1, provided that the cultivation tray 2 can slide relative to the base 1. For example, and without limitation, in an embodiment of the disclosure, the cultivation tray 2 may include a sliding structure 22. The sliding structure 22 is connected to the carrying tray 21 and the base 1, so that the carrying tray 21 can change its position relative to the base 1 through the sliding structure 22. For example, the sliding structure 22 may be a sliding rail assembly. A sliding rail can be combined with one of the base 1 and the carrying tray 21 and a slider can be combined with the other. Alternatively, one of the base 1 and the carrying tray 21 may directly form a sliding rail structure, and the other is provided with a slider, allowing relative sliding therebetween. Alternatively, the base 1 and the carrying tray 21 may respectively form an elongated slot and an protruding rib that can be fitted with each other and slide relative to each other, which is not limited in the disclosure.

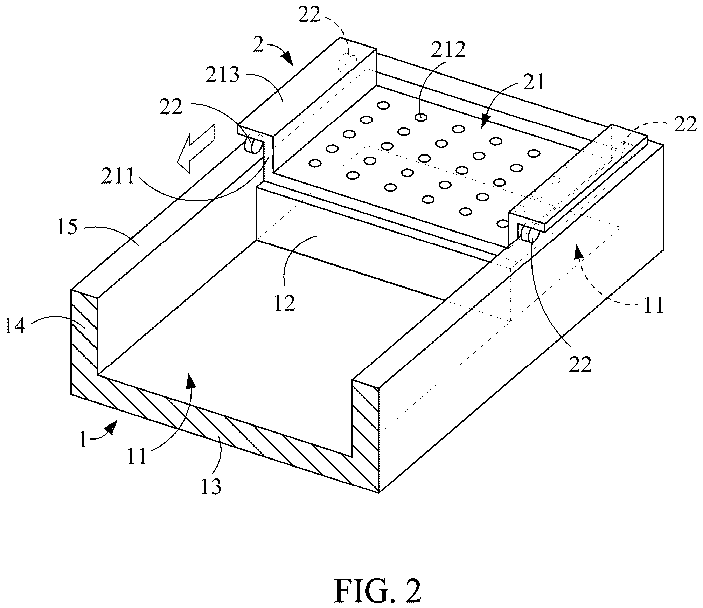

Referring to FIG. 2, in addition to the above embodiment, in an embodiment of the disclosure, the carrying tray 21 may further have a skirting 213. The skirting 213 is connected to the outer periphery of the main body 211. The skirting 213 may be connected to the main body 211 in a ring shape or only connected to a part of the circumference of the main body 211, which is not limited in the disclosure. The sliding structure 22 is disposed between the skirting 213 and a support surface 15 of the base 1. In this way, the cultivation tray 2 of this embodiment can be easily placed onto or removed from the base 1 from above. The smoothness of placing and removing the cultivation tray 2 does not be affected by the provision of the sliding structure 22.

The support surface 15 of the base 1 may be the top surface of the peripheral wall 14, so that the skirting 213 can be vertically aligned with the support surface 15. In this way, the cultivation tray 2 of this embodiment can make use of the weight of the carrying tray 21 and the weight of objects carried by the carrying tray 21 to abut against the support surface 15 of the base 1 more firmly through the sliding structure 22 on the premise of ensuring that the cultivation tray 2 can slide relative to the base 1 smoothly.

In addition to the above embodiment, in an embodiment of the disclosure, the sliding structure 22 may be a rolling member mounted to the skirting 213, such as a ball or a wheel. In this way, the sliding structure 22 of this example is simple in structure and easy to mount, and is durable.

Referring to FIG. 2 and FIG. 4, in addition to the above embodiment, in an embodiment of the disclosure, the vegetable and fruit cultivation system may further include a sliding driver 6. The microcontroller unit 5 is electrically connected to the sliding driver 6 to control the sliding driver 6 such that the cultivation tray 2 slides relative to the base 1. For example, when the sliding structure 22 is a wheel, the sliding driver 6 may be, for example, a wireless motor driver that can be controlled to drive the sliding structure 22 to rotate. In this way, the cultivation tray 2 can be automatically or semi-automatically controlled to slide relative to the base 1, eliminating the need for operators to manually move the cultivation tray 2. Furthermore, the displacement of the cultivation tray 2 can even be remotely controlled, thereby enhancing the operational convenience.

The environment control module 3 may include an image capture unit 33. The microcontroller unit 5 is electrically connected to the image capture unit 33. The image capture unit 33 is adapted to capture an image of fruit and vegetable plants P in the cultivation tray 2. After receiving the image, the microcontroller unit 5 analyzes the growth status of the fruit and vegetable plants P to control the sliding driver 6 such that the cultivation tray 2 slides relative to the base 1 and is aligned with a suitable nutrient solution tank 11.

Referring to FIG. 1 to FIG. 3, in addition to the above embodiment, in an embodiment of the disclosure, the number of the nutrient solution tanks 11 is preferably an even number greater than two, for example, four, six, or eight. The plurality of nutrient solution tanks 11 are arranged along an extending direction. The extending direction may be, for example, a straight or curved direction. The first supply device 41 is adapted to provide the potassium-containing culture solution to the odd-numbered nutrient solution tanks 11. The second supply device 42 is adapted to provide the low-potassium culture solution or the potassium-free culture solution to the even-numbered nutrient solution tanks 11. In this way, according to this embodiment, a plurality of cultivation trays 2 may be aligned with the odd-numbered nutrient solution tanks 11 in the culture period. In the treatment period, the plurality of cultivation trays 2 may be allowed to synchronously slide relative to the base 1 and be aligned with the even-numbered nutrient solution tanks 11. After harvesting, the plurality of cultivation trays 2 may be allowed to synchronously slide relative to the base 1 and be aligned with the odd-numbered nutrient solution tanks 11, thereby improving the cultivation capacity and management convenience of the whole cultivation system.

Referring to FIG. 1 and FIG. 4, in addition to the above embodiment, in an embodiment of the disclosure, the solution supply module 4 may further include at least one third supply device 43. The third supply device 43 is adapted to provide a conditioning culture solution to the nutrient solution tank 11 to change the formulation of the culture solution in the nutrient solution tank 11. For example, in this embodiment, the number of the third supply devices 43 may be two. One of the third supply device 43 may provide a magnesium-containing culture solution, and the other third supply device 43 may provide a zinc-containing culture solution. According to different cultivation requirements, the nutrient solutions are supplied to specific nutrient solution tanks 11 so as to finally harvest the vegetables and fruits with desired nutrient contents, for example low-potassium high-zinc vegetable/fruit or low-potassium high-magnesium vegetable/fruit.

Referring to FIG. 1 and FIG. 4, in addition to the above embodiment, in an embodiment of the disclosure, the solution supply module 4 may further include at least one liquid level sensor 44. The liquid level sensor 44 is disposed in the nutrient solution tank 11 and configured to sense the liquid level in the nutrient solution tank 11. The microcontroller unit 5 receives a sensing signal from the liquid level sensor 44 to control the first supply device 41, the second supply device 42, or the third supply device 43 to stop supplying the culture solution to the nutrient solution tank 11, or control the first supply device 41, the second supply device 42, or the third supply device 43 to replenish the culture solution to the nutrient solution tank 11 when the liquid level of the culture solution in the nutrient solution tank 11 drops below a set threshold.

It is worth mentioning that the disclosure does not limit the type of pipelines that allow the first supply device 41, the second supply device 42, or the third supply device 43 to communicate with the nutrient solution tanks 11. For example, separate pipelines may be used for individual communications, or pipelines may be appropriately shared and controlled with solenoid valves.

In addition, the following provides a cultivation example of one of fruits and vegetables that can be cultivated using the vegetable and fruit cultivation system of the disclosure:

In a cultivation example of the disclosure, low-potassium melon plants are cultivated from melon seeds. The "melon" referred to in the disclosure is an annual or biennial herbaceous plant belonging to the genus Lactuca within the Cucurbitaceae family. In the disclosure, Cucumis melo L. var. reticulatus Naud. with reticulate appearance, thick rind, and soft flesh is used for subsequent tests. However, those of ordinary skill in the art should be able to choose different varieties of melons for experiments and adjustments as needed, which is not limited herein.

In the germination period of the melon seeds, the microcontroller unit 5 controls the operation of the temperature controller 32 to maintain the temperature around the cultivation tray 2 at 20°C. Then germination is performed for 24 hours (days after sowing (DAS)=0). That is, the first environmental parameters include: the temperature is 20°C, and the duration is 24 hours. Subsequently, the sprouted melon seeds are transferred to the planting parts 212 (DAS=1) for cultivation.

In the seedling cultivation period of the melon seeds (DAS 1 to 12), the microcontroller unit 5 controls the operation of the light source 31 and adjusts the light intensity of the light source 31 to 160 µmol•m-2•s-1 and the lighting period to a 24-hour lighting period. Furthermore, the microcontroller unit 5 controls the operation of the temperature controller 32 to maintain the temperature around the cultivation tray 2 at 26°C. That is, the second environmental parameters include: the light intensity is 160 µmol•m-2•s-1, and the lighting period is a 24-hour lighting period at the temperature of 26°C.

13 days after sowing (DAS=13), the melon seeds enter the culture period, which lasts for 46 days. The microcontroller unit 5 controls the operation of the light source 31, maintains the light intensity of the light source 31 at 160 µmol•m-2•s-1, and adjusts the lighting period to an 18-hour lighting period and a 6-hour dark period. Furthermore, the microcontroller unit 5 controls the operation of the temperature controller 32 to maintain the temperature around the cultivation tray 2 at 31°C in the lighting period and the temperature at 25°C in the dark period. That is, the third environmental parameters include: the light intensity is 160 µmol•m-2•s-1, the lighting period is an 18-hour lighting period at the temperature of 31°C and a 6-hour dark period at the temperature of 25°C.

In this cultivation example, the potassium-containing culture solution supplied by the first supply device 41 uses the following chemicals: calcium nitrate (Ca(NO3)2·4H2O), potassium nitrate (KNO3), ammonium dihydrogen phosphate (NH4H2PO4), potassium dihydrogen phosphate (KH2PO4), potassium sulfate (K2SO4), magnesium sulfate (MgSO4·7H2O), sodium ferric EDTA (C10H12N2NaFeO8), boric acid (H3BO3), manganese chloride (MnCl2·4H2O), zinc sulfate (ZnSO4·7H2O), copper sulfate (CuSO4·5H2O), and sodium molybdate (Na2MoO4·2H2O), so that every liter of potassium-containing culture solution contains 200.73 mg of nitrate nitrogen (NO3-N), 17.36 mg of ammonium nitrogen (NH4-N), 38.40 mg of phosphorus, 224.10 mg of potassium, 172.32 mg of calcium, 63.51 mg of magnesium, and 83.79 mg of sulfur. In addition, every liter of low-potassium culture solution further contains trace elements such as 2.6 mg of iron, 0.3 mg of manganese, 0.02 mg of copper, 0.05 mg of zinc, 0.004 mg of molybdenum, 0.001 mg of sodium, and 0.27 mg of boron. During the culture process, the pH of the potassium-containing culture solution is adjusted to 6.0 using 1 N sodium hydroxide (NaOH). Moreover, the electrical conductivity of the potassium-containing culture solution is maintained at 1.2 mS•cm-1.

The treatment period of the melon seeds lasts for 39 days. The microcontroller unit 5 controls the operation of the light source 31, maintains the light intensity of the light source 31 at 160 µmol•m-2•s-1, and adjusts the lighting period to an 18-hour lighting period and a 6-hour dark period. Furthermore, the microcontroller unit 5 controls the operation of the temperature controller 32 to maintain the temperature around the cultivation tray 2 at 31°C in the lighting period and the temperature at 25°C in the dark period. That is, the fourth environmental parameters are the same as the third environmental parameters.

In this cultivation example, the chemicals used in the low-potassium culture solution supplied by the second supply device 42 are substantially similar to those in the aforementioned potassium-containing culture solution, except that the potassium nitrate (KNO3) is replaced by ammonium nitrate (NH4NO3), so that every liter of low-potassium culture solution contains 77.9 mg of nitrate nitrogen (NO3-N), 0.0 mg of ammonium nitrogen (NH4-N), 23.8 mg of phosphorus, 156.0 mg of potassium, 73.4 mg of calcium, 41.7 mg of magnesium, and 71.4 mg of sulfur. In addition, every liter of low-potassium culture solution further contains trace elements such as 2.6 mg of iron, 0.3 mg of manganese, 0.02 mg of copper, 0.05 mg of zinc, 0.004 mg of molybdenum, 0.001 mg of sodium, and 0.54 mg of boron. During the culture process, the pH of the low-potassium culture solution is also adjusted to 6.0 using 1 N sodium hydroxide (NaOH), and the electrical conductivity of the low-potassium culture solution is maintained at 1.2 mS•cm-1.

In another cultivation example of the disclosure, low-potassium lettuce plants are cultivated from lettuce seeds. The "lettuce" referred to in the disclosure is an annual or biennial herbaceous plant belonging to the genus Lactuca within the Asteraceae family. Based on the appearance, lettuce can be broadly categorized into head lettuce and leaf lettuce. Based on leaf shape, lettuce can be further categorized into round-leaved, narrow-leaved, pointed-leaved, angular-leaved, sword-leaved, lobed-leaved, ruffled-leaved, and variegated-leaved. In the disclosure, Lactuca sativa L. is used for subsequent tests. However, those of ordinary skill in the art should be able to choose different varieties of lettuce for experiments and adjustments as needed, which is not limited herein.

In the germination period of the lettuce seeds, the microcontroller unit 5 controls the operation of the temperature controller 32 to maintain the temperature around the cultivation tray 2 at 20°C. Then germination is performed for 24 hours (days after sowing (DAS)=0). That is, the first environmental parameters include: the temperature is 20°C, and the duration is 24 hours. Subsequently, the sprouted lettuce seeds are transferred to the planting parts 212 (DAS=1) for cultivation.

In the seedling cultivation period of the lettuce seeds (DAS 1 to 7), the microcontroller unit 5 controls the operation of the light source 31 and adjusts the light intensity of the light source 31 to 200 µmol•m-2•s-1 and a lighting period to a 24-hour lighting period. Furthermore, the microcontroller unit 5 controls the operation of the temperature controller 32 to maintain the temperature around the cultivation tray 2 at 25°C. That is, the second environmental parameters include: the light intensity is 200 µmol•m-2•s-1, and the lighting period is a 24-hour lighting period at 25°C.

8 days after sowing (DAS=8), the lettuce seeds enter the culture period, which may last for 23 to 27 days according to needs. The microcontroller unit 5 controls the operation of the light source 31, maintains the light intensity of the light source 31 at 200 µmol•m-2•s-1, and adjusts the lighting period to an 18-hour lighting period and a 6-hour dark period. Furthermore, the microcontroller unit 5 controls the operation of the temperature controller 32 to maintain the temperature around the cultivation tray 2 at 25°C in the lighting period and the temperature at 20°C in the dark period. That is, the third environmental parameters include: the light intensity is 200 µmol•m-2•s-1, and the lighting period is an 18-hour lighting period at 25°C and a 6-hour dark period at 20°C.

In this cultivation example, the potassium-containing culture solution supplied by the first supply device 41 uses the following chemicals: potassium nitrate (KNO3), ammonium dihydrogen phosphate (NH4H2PO4), magnesium sulfate (MgSO4·7H2O), sodium ferric EDTA (C10H12N2NaFeO8), calcium nitrate (Ca(NO3)2·4H2O), manganese sulfate (MnSO4·H2O), boric acid (H3BO3), copper sulfate (CuSO4·5H2O), zinc sulfate (ZnSO4·7H2O), and sodium molybdate (Na2MoO4·2H2O), so that every liter of potassium-containing culture solution contains 84.0 mg of nitrate nitrogen (NO3-N), 63.0 mg of ammonium nitrogen (NH4-N), 15.4 mg of phosphorus, 156.0 mg of potassium, 40.0 mg of calcium, 12.2 mg of magnesium, and 16.2 mg of sulfur. In addition, every liter of potassium-containing culture solution further contains trace elements such as 3.2 mg of iron, 0.5 mg of manganese, 0.02 mg of copper, 0.05 mg of zinc, 0.01 mg of molybdenum, and 1.3 mg of sodium. During the culture process, the pH of the potassium-containing culture solution is adjusted to 6.0±0.2 using 1 N sodium hydroxide (NaOH). The electrical conductivity of the potassium-containing culture solution is maintained at 1.2±0.2 mS•cm-1.

As the treatment period and the culture period totally last for 35 days, the treatment period of the lettuce seeds lasts for 8 to 12 days. The microcontroller unit 5 controls the operation of the light source 31, maintains the light intensity of the light source 31 at 200 µmol•m-2•s-1, and adjusts the lighting period to an 18-hour lighting period and a 6-hour dark period. Furthermore, the microcontroller unit 5 controls the operation of the temperature controller 32 to maintain the temperature around the cultivation tray 2 at 25°C in the lighting period and the temperature at 20°C in the dark period. That is, the fourth environmental parameters are the same as the third environmental parameters.

In this cultivation example, the chemicals used in the potassium-free culture solution supplied by the second supply device 42 are substantially similar to those in the aforementioned potassium-containing culture solution, except that the potassium nitrate (KNO3) is replaced by ammonium nitrate (NH4NO3), so that every liter of potassium-free culture solution contains 84.0 mg of nitrate nitrogen (NO3-N), 63.0 mg of ammonium nitrogen (NH4-N), 15.4 mg of phosphorus, 0.0 mg of potassium, 40.0 mg of calcium, 12.2 mg of magnesium, and 16.2 mg of sulfur. In addition, every liter of potassium-free culture solution further contains trace elements such as 3.2 mg of iron, 0.5 mg of manganese, 0.02 mg of copper, 0.05 mg of zinc, 0.01 mg of molybdenum, and 1.3 mg of sodium. During the culture process, the pH of the potassium-free culture solution is also adjusted to 6.0±0.2 using 1 N sodium hydroxide (NaOH). The electrical conductivity of the potassium-free culture solution is maintained at 1.2±0.2 mS•cm-1.

It is worth noting that, due to the high content of iron added to the culture solutions used in the culture period and the treatment period in the above two cultivation examples, the cultivated vegetable and fruit will have the characteristics of low potassium and high iron. Therefore, the anemia caused by long-term consumption of low-potassium food can be alleviated by supplementing iron. In addition, the cultivation examples applicable to the disclosure are not limited to the above two.

The disclosure has been disclosed above with preferred embodiments, but it should be understood by those skilled in the art that the embodiments are only used for describing the disclosure and should not be interpreted as limiting the scope of the disclosure. It should be noted that all changes and substitutions equivalent to the examples shall fall within the scope of the disclosure. Therefore, the scope of protection of the disclosure shall be as defined in the claims.

## Claims

1. A vegetable and fruit cultivation system with low potassium and adjustable nutrients, comprising:
a base (1), provided with at least two nutrient solution tanks (11) that are spaced apart;
a cultivation tray (2), slidably disposed on the base (1) and adapted to slide to and be aligned with different nutrient solution tanks (11) according to the cultivation period of vegetables and fruits;
an environment control module (3), configured to adjust the temperature and lighting around the cultivation tray (2);
a solution supply module (4), comprising a first supply device (41) and a second supply device (42), the first supply device (41) being configured to provide a potassium-containing culture solution to one of the nutrient solution tanks (11), and
the second supply device (42) being configured to provide a low-potassium culture solution or a potassium-free culture solution to the other nutrient solution tank (11); and
a microcontroller unit (5), electrically connected to the environment control module (3) and the solution supply module (4) to control the operation of the environment control module (3) and the supply amount and timing of the culture solution provided by the first supply device (41) and the second supply device (42) to the nutrient solution tank (11).

2. The vegetable and fruit cultivation system with low potassium and adjustable nutrients according to claim 1, wherein the cultivation tray (2) comprises a carrying tray (21) and a sliding structure (22), the sliding structure (22) being connected to the carrying tray (21) and the base (1).

3. The vegetable and fruit cultivation system with low potassium and adjustable nutrients according to claim 2, wherein the carrying tray (21) has a main body (211) and a skirting (213), the skirting (213) being connected to the outer periphery of the main body (211), and the sliding structure (22) being disposed between the skirting (213) and a support surface (15) of the base (1).

4. The vegetable and fruit cultivation system with low potassium and adjustable nutrients according to claim 3, wherein the base (1) comprises a bottom plate (13) and a peripheral wall (14), the peripheral wall (14) being connected to the circumference of the bottom plate (13), at least one partition (12) being connected to the bottom plate (13) and the inner wall of the peripheral wall (14) to divide the inside of the base (1) into the at least two nutrient solution tanks (11), the support surface (15) being the top surface of the peripheral wall (14), and the skirting (213) being vertically aligned with the support surface (15).

5. The vegetable and fruit cultivation system with low potassium and adjustable nutrients according to claim 3, wherein the sliding structure (22) is a rolling member mounted to the skirting (213).

6. The vegetable and fruit cultivation system with low potassium and adjustable nutrients according to claim 1, further comprising a sliding driver (6), wherein the microcontroller unit (5) is electrically connected to the sliding driver (6) to control the sliding driver (6) such that the cultivation tray (2) slides relative to the base (1).

7. The vegetable and fruit cultivation system with low potassium and adjustable nutrients according to claim 6, wherein the environment control module (3) comprises an image capture unit (33), and the microcontroller unit (5) is electrically connected to the image capture unit (33), the image capture unit (33) being adapted to capture an image of fruit and vegetable plants on the cultivation tray (2), and after receiving the image, the microcontroller unit (5) analyzing the growth status of the fruit and vegetable plants to control the sliding driver (6) such that the cultivation tray (2) slides relative to the base (1) and is aligned with a suitable nutrient solution tank (11).

8. The vegetable and fruit cultivation system with low potassium and adjustable nutrients according to any one of claims 1 to 7, wherein the number of the nutrient solution tanks (11) is an even number greater than two, and the plurality of nutrient solution tanks (11) are arranged along an extending direction, the first supply device (41) being adapted to provide the potassium-containing culture solution to the odd-numbered nutrient solution tanks (11), and the second supply device (42) being adapted to provide the low-potassium culture solution or the potassium-free culture solution to the even-numbered nutrient solution tanks (11).

9. The vegetable and fruit cultivation system with low potassium and adjustable nutrients according to any one of claims 1 to 7, wherein the solution supply module (4) comprises at least one third supply device (43), the third supply device (43) being adapted to provide a conditioning culture solution to the nutrient solution tank (11) to change the formulation of the culture solution in the nutrient solution tank (11).

10. The vegetable and fruit cultivation system with low potassium and adjustable nutrients according to any one of claims 1 to 7, wherein the solution supply module (4) comprises at least one liquid level sensor (44), the liquid level sensor (44) being disposed in the nutrient solution tank (11) and configured to sense the liquid level in the nutrient solution tank (11); and the microcontroller unit (5) receives a sensing signal of the liquid level sensor (44) to control the first supply device (41) or the second supply device (42) to stop supplying the culture solution to the nutrient solution tank (11), or control the first supply device (41) or the second supply device (42) to replenish the culture solution to the nutrient solution tank (11) when the liquid level of the culture solution in the nutrient solution tank (11) drops below a set threshold.
